# EUROPEAN PATENT SPECIFICATION

(11) **EP 3 322 656 B1**
(45) Date of publication and mention of the grant of the patent: **19.05.2021**
(21) Application number: 16844899.1
(22) Date of filing: 30.08.2016
(51) Int. Cl.: B65G 21/20, B65G 39/02, F16C 13/00, B65G 39/06

(54) **CONVEYOR GUIDE WALL WITH DAMPING ROLLERS**
FÖRDERFÜHRUNGSWAND MIT FEUCHTWALZEN
PAROI DE GUIDAGE DE TRANSPORTEUR COMPRENANT DES ROULEAUX D'AMORTISSEMENT

(30) Priority: 08.09.2015 US 201514847836
(43) Date of publication of application: 23.05.2018
(73) Proprietor: Laitram, LLC, Harahan, LA 70123 (US)
(72) Inventor: FOURNEY, Matthew L., Laurel, Maryland 20723 (US)
(74) Representative: Forresters IP LLP
(86) International application number: PCT/US2016/049463
(87) International publication number: WO 2017/044353

(56) References cited:
- EP-A1- 1 340 698
- DE-U1-202008 008 336
- KR-A- 20090 075 966
- KR-B1- 100 782 604
- US-A- 2 828 640
- US-A- 3 486 543
- US-A- 3 934 706
- US-A- 5 143 200
- US-A1- 2009 000 903
- US-A1- 2009 000 903
- US-A1- 2012 213 458
- US-B1- 6 196 375

## Description

### BACKGROUND

The invention relates generally to power-driven conveyors and more particularly to guides positioned alongside or within a stream of conveyed articles.

Guide walls are often used alongside, across, or within a stream of conveyed articles to guide the articles along a conveyor. Usually the walls have static surfaces along which the articles slide as they are being conveyed. Bead or roller rails, or guides, are used to replace the sliding friction of static guides with lower rolling friction. These low-friction guides are made of hard beads or rollers arranged in stacks on rods. The beads or rollers are free to rotate on the rods when contacted by an advancing article. Often the bead or roller guides are used as stops across a conveyor to divert articles to a side or as side rails along which articles can be registered. Because the beads or rollers are made of a hard material, articles can bounce off the rigid bead or roller on contact. The impact can damage the article or alter its alignment or orientation, which can degrade the transfer to another conveyor downstream.

US3934706A relates to a conveyor guide wall having the features of the preamble of claim 1.

### SUMMARY

The present invention provides a conveyor guide wall according to claim 1. Also provided is a conveyor system in accordance with claim 6.

2. According to the invention, the J 2. conveyor guide wall comprises a plurality of columns of one or more rollers mounted between the top and bottom rails. Each of the roller columns is arranged to rotate on parallel axes of rotation. Each of the rollers includes a first side, a second side, and an outer periphery encircling the axis of rotation and extending axially from the first side to the second side. Voids extend through each roller from the first side to the second side between the outer periphery and the axis of rotation to absorb impacts against the outer periphery of the roller.

In another aspect of the invention, a conveyor system embodying features of the invention comprises a conveyor conveying articles in a conveying direction along a conveying plane and a guide wall arranged perpendicular to the conveying plane to contact the articles. The guide wall includes rollers that are rotatable on axes of rotation transverse to the conveying plane and that have outer peripheries to contact the articles. Each of the rollers has a plurality of voids extending through the roller between the axis of rotation and the outer periphery to absorb impacts against the outer periphery of the roller by the articles as they are conveyed in the conveying direction.

### BRIEF DESCRIPTION OF THE DRAWINGS

FIG. 1 is an isometric view of a section of a conveyor guide wall embodying features of the invention alongside a portion of a conveyor;
FIGS. 2A and 2B are isometric and side views of a roller in a guide wall as in FIG. 1;
FIG. 3 is an isometric view of a flanged sleeve bushing used in the roller of FIGS. 2A and 2B; and
FIGS. 4A and 4B are isometric and side views of a column of rollers as in the guide wall of FIG. 1.

### DETAILED DESCRIPTION

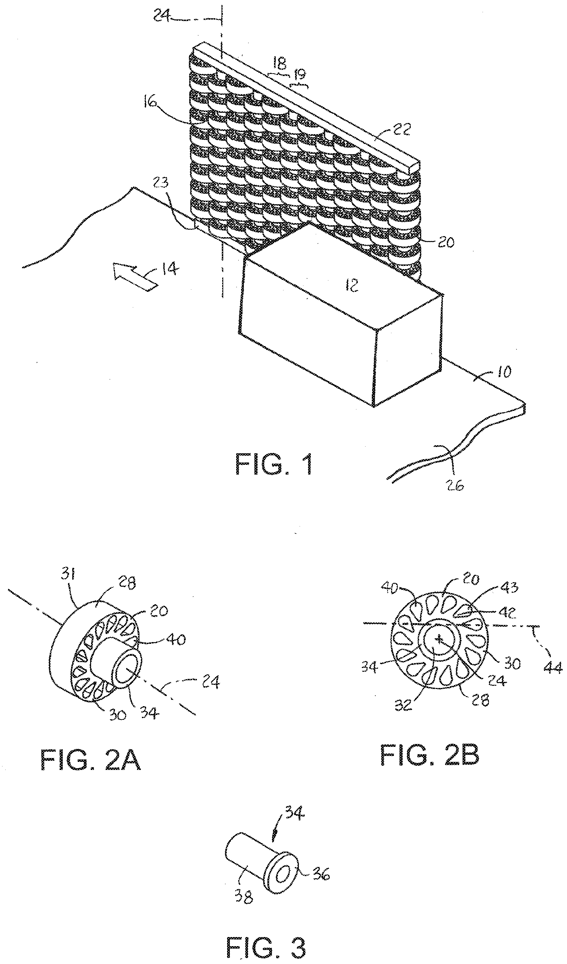

A conveyor system embodying features of the invention is shown in FIG. 1. A conveyor 10, which may be a conveyor belt as shown, a roller conveyor, or another kind of conveyor, advances articles 12 in a conveying direction 14. In particular the conveyor, whether a belt or a roller conveyor, could include article-supporting rollers arranged to rotate in a direction oblique to the conveying direction 14 to push articles toward a side of the conveyor. A guide wall 16 along a side of the conveyor 10 prevents the conveyed articles 12 from falling off the side of the conveyor and also registers the articles along the side.

The guide wall 16 comprises columns 18, 19 of stacked rollers 20 mounted between parallel top and bottom rails 22, 23. In this example the rollers 20 in adjacent columns 18, 19 are vertically offset so that they can be interleaved in a high-density pattern. But the rollers could be vertically aligned in a lower-density pattern. Each column 18, 19 of rollers 20 rotates on an axis of rotation 24 that is transverse-in this example, perpendicular-to the conveying plane 26 of the conveyor 10. To increase or decrease the pressure on the conveyor as the articles are conveyed along the guide wall 16, the axes of rotation 24 can be angled forward or rearward in the conveying direction 14-slightly off perpendicular to the conveying plane 26 of the conveyor 10. For small articles a guide wall with only a single roller in each column may suffice. The rollers 20 rotate freely on their parallel axes of rotation 24 and contact the conveyed articles 12 in low-friction, rolling contact.

One version of the rollers 20 is shown in more detail in FIGS. 2A and 2B. The roller 20 has an outer periphery 28 extending axially across the width of the roller between a first side 30 and an opposite second side 31. A central bore 32 through the roller 20 defines its axis of rotation 24. A bushing 34 is received in the central bore 32 by a press-fit, overmolding, or other means of attachment. The bushing 34 shown in FIG. 3 is a flanged sleeve bushing with a flange 36 at one end of a sleeve 38. The bushing 34 is made of a rigid plastic material, such as nylon, PEEK, or a hardened PTFE, or of a metal material such as aluminum, steel, or stainless steel, for durable, wear-resistant, low-friction rotational contact with an axle rod. The roller 20 is made of a less hard, more pliable material that is quieter and more energy-absorbing. Voids 40 extend through the roller 20 between the periphery 28 and the bore 32 from the first side 30 to the axially opposite second side 31. In this version the voids 40 extend parallel to the axis of rotation 24 and form channels that open onto the first and second sides 30, 31 of the roller 20. The voids 40 are shown regularly spaced circumferentially around the roller 20. And the voids 40 have a teardrop-shaped cross section that has a narrow end 42 nearer the bore 32 of the roller 20 tapering out to a wide end 43 nearer the periphery 28. Each of the voids 40 has an axis of symmetry 44 that does not intersect the axis of rotation 24. In this version the voids 40 extend across the width of the roller 20 parallel to the axis of rotation 24. The voids 40 allow the roller 20 to elastically deform slightly and absorb impacts with conveyed articles. By absorbing the impacts, the rollers 20 damp the motion of the articles as they strike and prevent bouncing and reorientation.

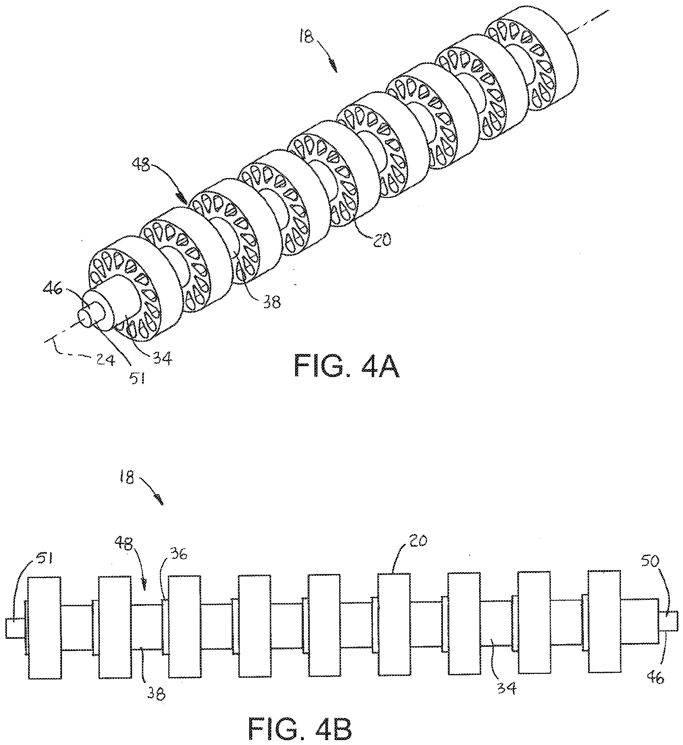

The roller columns 18 are shown in more detail in FIGS. 4A and 4B. The rollers 20 are stacked on a rod 46 that extends through the bushings 34 in the roller bores. The sleeves 38 of the bushings 34 sit on the larger-diameter flanges 36 of adjacent bushings in the column 18. The sleeves 38 are longer than the width of the rollers 20 and serve with the flanges 36 as spacers to provide a gap 48 between adjacent rollers 20 large enough to accommodate the interleaved rollers of an adjacent column 18,19 as in FIG. 1. If the rollers of adjacent columns are not interleaved, bushings with shorter sleeves can be used. The ends 50, 51 of the rod 46 are retained in the top and bottom rails 22, 23 shown in FIG. 1. As another example, the guide wall can be positioned within a stream of articles, rather than alongside as in FIG. 1, to help corral, guide, or separate the flow of articles. Or it could be used as a stop across a conveyor to divert intercepted articles to one side. So, as these few examples suggest, the scope of the claims is not meant to be limited to the details of the exemplary versions used to describe the invention.

## Claims

1. A conveyor guide wall (16) comprising:
a top rail (22) and a bottom rail (23), parallel to the top rail, and a plurality of rods (46) retained at opposite ends in the top and bottom rails (22, 23);
a plurality of columns of one or more rollers (20) arranged to rotate on parallel axes of rotation (23); wherein each of the one or more rollers (20) includes:
a first side (30) and a second side (31);
an outer periphery (28) encircling the axis of rotation (24) and extending axially from the first side to the second side
**characterised in that** each of the one or more rollers (20) includes:
a plurality of voids (40) extending through the roller (20) from the first side to the second side between the outer periphery and the axis of rotation to absorb impacts against the outer periphery (28) of the roller; and
**in that** each of the rollers (20) has a central bore (32) and a bushing (34) disposed in the central bore to receive one of the rods (46), wherein the bushing (34) is a flanged sleeve (38) bushing having a flange (36) at one end in contact with the first side (30) of the roller.

2. A conveyor guide wall as in claim 1 wherein the axial length of the bushing (34) is greater than the axial distance between the first (30) and second sides (31) of the roller (20).

3. A conveyor guide wall as in claim 1 wherein the bushing (34) is made of a hard plastic or metallic material and the roller (20) is made of a more pliable material.

4. A conveyor guide wall as in claim 1 wherein the voids (40) form channels that extend parallel to the axis of rotation (24) and that open onto the first and second sides (30, 31); or wherein the voids (40) are teardrop-shaped in cross section.

5. A conveyor guide wall as in claim 1 wherein each of the voids (40) has a cross section that tapers out from a narrow end (42) nearer the axis of rotation (24) to a wide end (43) nearer the periphery (28) of the roller (20); or wherein each of the voids (40) has a cross section with an axis of symmetry (44) that does not intersect the axis of rotation (24) of the roller (20).

6. A conveyor system comprising:
a conveyor (10) conveying articles (12) in a conveying direction (14) along a conveying plane (26);
a guide wall (16) according to any of claims 1 to Z 5.

7. A conveyor system as in claim 6 wherein the guide wall (16) is arranged along a side of the conveyor (10) to form a guide along the side of the conveyor to prevent articles (12) from falling off the side and against which articles can be registered.

8. A conveyor system as in claim 6 wherein the top rail and the bottom rail are parallel to the conveying plane.

## Patentansprüche

1. Transportband-Führungswand (16), umfassend:
eine obere Schiene (22) und eine untere Schiene (23) parallel zu der oberen Schiene und mehrere Stangen (46), die an gegenüberliegenden Enden in der oberen und der unteren Schiene (22, 23) festgehalten werden,
mehrere Säulen aus einer oder mehreren Rollen (20), die dazu angeordnet sind, sich auf parallelen Drehachsen (23) zu drehen, wobei jede der einen oder der mehreren Rollen (20) beinhaltet:
eine erste Seite (30) und eine zweite Seite (31),
einen Außenumfang (28), der die Drehachse (24) umgibt und sich axial von der ersten Seite zu der zweiten Seite erstreckt,
**dadurch gekennzeichnet, dass** jede der einen oder der mehreren Rollen (20) beinhaltet:
mehrere Hohlräume (40), die sich durch die Rolle (20) hindurch von der ersten Seite zu der zweiten Seite zwischen dem Außenumfang und der Drehachse erstrecken, um Stöße gegen den Außenumfang (28) der Rolle zu dämpfen, und
dass jede der Rollen (20) eine mittige Bohrung (32) und eine Buchse (34) aufweist, die in der mittigen Bohrung anordnet ist, um eine der Stangen (46) aufzunehmen, wobei die Buchse (34) eine Buchse in Form einer geflanschten Hülse (38) ist, die einen Flansch (36) an einem Ende in Kontakt mit der ersten Seite (30) der Rolle aufweist.

2. Transportband-Führungswand nach Anspruch 1, wobei die axiale Länge der Buchse (34) größer ist als der axiale Abstand zwischen der ersten (30) und der zweiten (31) Seite der Rolle (20).

3. Transportband-Führungswand nach Anspruch 1, wobei die Buchse (34) aus einem Hartkunststoff- oder Metallmaterial besteht und die Rolle (20) aus einem nachgiebigeren Material besteht.

4. Transportband-Führungswand nach Anspruch 1, wobei die Hohlräume (40) Kanäle bilden, die sich parallel zu der Drehachse (24) erstrecken und die sich zu der ersten und der zweiten Seite (30, 31) hin öffnen, oder wobei die Hohlräume (40) im Querschnitt tränenförmig sind.

5. Transportband-Führungswand nach Anspruch 1, wobei jeder der Hohlräume (40) einen Querschnitt aufweist, der sich von einem schmalen Ende (42), das der Drehachse (24) näher ist, zu einem breiten Ende (43), das dem Umfang (28) der Rolle (20) näher ist, aufweitet, oder wobei jeder der Hohlräume (40) einen Querschnitt mit einer Symmetrieachse (44) aufweist, welche die Drehachse (24) der Rolle (20) nicht schneidet.

6. Transportbandsystem, umfassend:
ein Transportband (10), das Gegenstände (12) in einer Transportrichtung (14) entlang einer Transportebene (26) transportiert,
eine Führungswand (16) nach einem der Ansprüche 1 bis 5.

7. Transportbandsystem nach Anspruch 6, wobei die Führungswand (16) entlang einer Seite des Transportbandes (10) angeordnet ist, um eine Führung entlang der Seite des Transportbandes zu bilden, um das Herunterfallen von Gegenständen (12) von der Seite zu verhindern, und an der Gegenstände registriert werden können.

8. Transportbandsystem nach Anspruch 6, wobei die obere Schiene und die untere Schiene parallel zu der Transportebene liegen.

## Revendications

1. Une paroi de guidage de transporteur (16) comprenant :
un rail supérieur (22), un rail inférieur (23) parallèle au rail supérieur, et une pluralité de tiges (46) retenues aux extrémités opposées dans les rails supérieur et inférieur (22, 23) ;
une pluralité de colonnes d'un ou plusieurs rouleaux (20) disposés pour rouler sur des axes de rotation parallèles (23) ; chacun du ou des rouleaux (20) comprenant :
un premier côté (30) et un deuxième côté (31) ;
une périphérie extérieure (28) encerclant l'axe de rotation (24) et s'étendant axialement du premier côté au deuxième côté,
**caractérisée en ce que** chacun du ou des rouleaux (20) comporte :
une pluralité de vides (40) s'étendant à travers le rouleau (20) du premier côté au deuxième côté entre la périphérie extérieure et l'axe de rotation pour absorber les chocs contre la périphérie extérieure (28) du rouleau ; et
**en ce que** chacun des rouleaux (20) a un alésage central (32) et une douille (34) disposée dans l'alésage central pour recevoir une des tiges (46), la douille (34) étant une douille à manchon bridé (38) présentant une bride (36) à une extrémité en contact avec le premier côté (30) du rouleau.

2. Une paroi de guidage de transporteur selon la revendication 1, dans laquelle la longueur axiale de la douille (34) est supérieure à la distance axiale entre le premier (30) et le deuxième côté (31) du rouleau (20).

3. Une paroi de guidage de transporteur selon la revendication 1, dans laquelle la douille (34) est faite d'une matière métallique ou plastique dure et le rouleau (20) est fait d'une matière plus souple.

4. Une paroi de guidage de transporteur selon la revendication 1, dans laquelle les vides (40) forment des canaux qui s'étendent parallèlement à l'axe de rotation (24) et qui s'ouvrent sur les premier et deuxième côtés (30, 31) ; ou dans laquelle les vides (40) ont une section transversale en forme de larme.

5. Une paroi de guidage de transporteur selon la revendication 1, dans laquelle chacun des vides (40) a une section transversale qui s'élargit depuis une extrémité étroite (42) plus proche de l'axe de rotation (24) jusqu'à une extrémité large (43) plus proche de la périphérie (28) du rouleau (20) ; ou dans laquelle chacun des vides (40) a une section transversale avec un axe de symétrie (44) qui ne coupe pas l'axe de rotation (24) du rouleau (20).

6. Un système de transporteur comprenant :
un transporteur (10) transportant des articles (12) dans une direction de transport (14) le long d'un plan de transport (26) ;
une paroi de guidage (16) selon une quelconque des revendications 1 à 5.

7. Un système de transporteur selon la revendication 6, dans lequel la paroi de guidage (16) est disposée le long d'un côté du transporteur (10) pour former un guide le long du côté du transporteur pour empêcher les articles (12) de tomber du côté et contre laquelle les articles peuvent être enregistrés.

8. Un système de transporteur selon la revendication 6, dans lequel le rail supérieur et le rail inférieur sont parallèles au plan de transport.
